# EUROPEAN PATENT SPECIFICATION

(11) **EP 2 703 801 B1**
(45) Date of publication and mention of the grant of the patent: **25.11.2020**
(21) Application number: 12777671.4
(22) Date of filing: 27.04.2012
(51) Int. Cl.: G01N 1/28, G01N 33/48, C12Q 1/02, G01N 1/30

(54) **METHOD FOR MAKING BIOLOGICAL MATERIAL TRANSPARENT**
VERFAHREN ZUR HERSTELLUNG EINES TRANSPARENTEN BIOLOGISCHEN MATERIALS
PROCÉDÉ PERMETTANT DE RENDRE TRANSPARENT UN MATÉRIAU BIOLOGIQUE

(30) Priority: 28.04.2011 JP 2011102264
(43) Date of publication of application: 05.03.2014
(73) Proprietor: Riken, Wako-shi, Saitama 351-0198 (JP)
(72) Inventor: MIYAWAKI, Atsushi, Wako-shi Saitama 351-0198 (JP); HAMA, Hiroshi, Wako-shi Saitama 351-0198 (JP); KUROKAWA, Hiroshi, Wako-shi Saitama 351-0198 (JP)
(74) Representative: Bittner, Thomas L.
(86) International application number: PCT/JP2012/061475
(87) International publication number: WO 2012/147965

(56) References cited:
- WO-A1-2011/111876
- WO-A2-2008/008975
- WO-A2-2008/088403
- JP-A- 2003 066 035
- JP-A- 2003 514 831
- JP-A- 2007 051 957
- US-A- 5 612 028
- US-B1- 6 472 216

## Description

### Technical Field

The present invention relates to a method for making a biological material transparent.

### Background Art

For an internal observation of a non-transparent tissue with use of an optical microscope, a pretreatment (a clearing treatment for making a subject transparent) using a clearing reagent is performed.

As typical examples of the clearing reagent and the pretreatment method, there have been known (i) a Focus Clear (product name) solution described by Ann-Shyn Chiang in Patent Literature 1 and Non-Patent Literature 1 and (ii) a tissue clearing method described by Hans-Ulrich Dodt et al. in Non-Patent Literature 2. These are both used to make a tissue transparent for an observation of a fluorescent substance existing in the tissue.

Document WO 2011/111876 A1 discloses a method and a system for making a biological material transparent. A clearing reagent comprises as an active component at least one compound selected from urea and urea derivatives. The clearing reagent is a solution.

Document WO 2008/008975 A2 discloses processes for recovering and purifying refolded recombinant proteins produced in heterologous host cells which includes a step of refolding the protein in a high pH buffer.

Document WO 2008/088403 A2 discloses a method of purifying apolipoprotein A-I.

### Citation List

### [Patent Literature]

### Patent Literature 1

U.S. Patent No. 6472216 (Date of patent: October 29, 2002)

### [Non-Patent Literatures]

Non-Patent Literature 1
   Ann-Shyn Chiang et al.: Insect NMDA receptors mediate juvenile hormone biosynthesis. PNAS 99(1), 37-42 (2002).
Non-Patent Literature 2
   Hans-Ulrich Dodt et al.: Ultramicroscopy: three-dimensional visualization of neuronal networks in the whole mouse brain. Nature Methods 4 (4), 331-336 (2007).

### Summary of Invention

### Technical Problem

In the above-described methods, an organic solvent is essential as an active component or the like for the clearing treatment. Accordingly, the methods are hardly applicable to living tissues, and applicable to fixed samples mainly. The methods also have such a risk causing shrinkage of a biological material when the biological material is subjected to the clearing treatment.

Prior to making the present invention, the inventors of the present invention had found that it was possible to make a biological material transparent by using urea. Since urea is a component having a high bio-affinity, use of urea or a urea derivative as an active component for a clearing treatment is likely to solve the above problems.

The present inventors further made an attempt to achieve an object of developing, with use of urea or a urea derivative, a more efficient method for a clearing treatment on a biological material.

The present invention was made in order to solve the foregoing problems, and an object of the present invention is to provide: a more efficient method for making a biological material transparent with use of a component having an excellent bio-affinity; and use thereof.

### Solution to Problem

In order to solve the foregoing problems, the present inventors made diligent studies to reach a new finding that, a combined use of solutions having different concentrations of urea or the like, which serves as an active component, makes it possible to perform more efficiently a clearing treatment while inhibiting undesirable changes in volume. Based on this, the present inventors arrived at the present invention.

Specifically, a method for making a biological material transparent according to the present invention includes: a first permeation step of causing a solution to permeate into a biological material, which solution contains at least one compound selected from the group consisting of urea and urea derivatives at a predetermined concentration; and then a second permeation step of causing a solution to permeate into the biological material, which solution contains at least one compound selected from the group consisting of urea and urea derivatives at a concentration higher than the concentration of the at least one compound contained in the solution used in the first permeation step.

The method for making a biological material transparent according to the present invention can further include, subsequent to the second permeation step, a third permeation step of causing a solution to permeate into the biological material, which solution contains at least one compound selected from the group consisting of urea and urea derivatives at a concentration lower than the concentration of the at least one compound contained in the solution used in the second permeation step.

The method for making a biological material transparent according to the present invention is preferably arranged such that, in the above method, the concentration of the at least one compound contained in the solution used in the first permeation step and the concentration of the at least one compound contained in the solution used in the second permeation step are substantially the same.

The method for making a biological material transparent according to the present invention is preferably arranged such that, in the above method, the solution used in the first permeation step and the solution used in the third permeation step are identical with each other.

The method for making a biological material transparent according to the present invention is preferably arranged such that, in the above method, urea is contained as the at least one compound in each of (i) the solution used in the first permeation step, (ii) the solution used in the second permeation step, and (iii) the solution used in the third permeation step, which is performed if necessary.

The method for making a biological material transparent according to the present invention is preferably arranged such that, in the above method, at least one of (i) the solution used in the first permeation step, (ii) the solution used in the second permeation step, and (iii) the solution used in the third permeation step, which is performed if necessary, is an aqueous solution.

The method for making a biological material transparent according to the present invention is preferably arranged such that, in the above method, at least one of (i) the solution used in the first permeation step, (ii) the solution used in the second permeation step, and (iii) the solution used in the third permeation step, which is performed if necessary, contains a surfactant.

The method for making a biological material transparent according to the present invention is preferably arranged such that, in the above method, the surfactant is a nonionic surfactant.

The method for making a biological material transparent according to the present invention is preferably arranged such that, in the above method, the nonionic surfactant is at least one selected from the group consisting of Triton X (Registered Trademark), Tween (Registered Trademark), and NP-40 (product name).

The method for making a biological material transparent according to the present invention is preferably arranged such that, in the above method, the aqueous solution further contains a water-soluble macromolecular compound.

The method for making a biological material transparent according to the present invention is preferably arranged such that, in the above method, the water-soluble macromolecular compound is at least one selected from the group consisting of Percoll (Registered Trademark), Ficoll (Registered Trademark), polyethylene glycol, and polyvinyl pyrrolidone.

The method for making a biological material transparent according to the present invention is preferably arranged such that, in the above method, at least one of (i) the solution used in the first permeation step, (ii) the solution used in the second permeation step, and (iii) the solution used in the third permeation step, which is performed if necessary, further contains at least one selected from the group consisting of glycerol, carboxy vinyl polymer, hydroxypropyl methylcellulose, propylene glycol, and macrogol.

The method for making a biological material transparent according to the present invention is preferably arranged such that, in the above method, the method makes transparent, as the biological material, (i) a tissue or an organ derived from a multicellular animal or (ii) a multicellular animal which is not a human.

The method for making a biological material transparent according to the present invention is preferably arranged such that, in the above method, the concentration of the at least one compound contained in the solution used in the first permeation step is 2.5M or more and not more than 5.5M, and the concentration of the at least one compound contained in the solution used in the second permeation step is 6M or more and not more than 8.5M.

A kit for a clearing treatment for making a biological material transparent includes: a first solution containing at least one compound selected from the group consisting of urea and urea derivatives at a predetermined concentration; and a second solution containing at least one compound selected from the group consisting of urea and urea derivatives at a concentration higher than the concentration of the at least one compound contained in the first solution. The kit as such is not part of the present invention.

The kit for a clearing treatment for making a biological material transparent is preferably arranged such that the first solution contains urea at a concentration of 2.5M or more and not more than 5.5M and a surfactant at a concentration of 0.025(w/v)% or more and not more than 5(w/v)%.

The kit for a clearing treatment for making a biological material transparent is preferably arranged such that the second solution contains urea at a concentration of 5.5M or more and not more than 8.5M and a/the surfactant at a concentration of 0.025(w/v)% or more and not more than 5(w/v)%.

The kit for a clearing treatment for making a biological material transparent is preferably arranged such that the first solution contains at least one selected from the group consisting of glycerol, carboxy vinyl polymer, hydroxypropyl methylcellulose, propylene glycol, and macrogol.

### Advantageous Effects of Invention

The present invention provides: a more efficient method for making a biological material transparent with use of a component having an excellent bio-affinity; and use thereof.

### Brief Description of Drawings

Fig. 1, related to a reference example of the present invention, is a view showing a mouse hippocampus treated with a clearing reagent for making a biological material transparent.
Fig. 2, related to another reference example of the present invention, is a view showing a mouse hippocampus treated with a clearing reagent for making a biological material transparent.
Fig. 3, related to further another reference example of the present invention, is a view showing the whole of a mouse cerebrum treated with a clearing reagent for making a biological material transparent.
Fig. 4, related to still further another reference example of the present invention, is a graph illustrating a relationship between (i) a clearing reagent for making a biological material transparent and (ii) swelling of a biological material treated with the clearing reagent.
Fig. 5, related to yet another reference example of the present invention, is a view showing the whole of a mouse cerebrum treated with a clearing reagent for making a biological material transparent.
Fig. 6, related to still yet another reference example of the present invention, is a graph showing the result of light transmittance measurement of mouse brain slices having been treated with clearing reagents for making a biological material transparent.
Fig. 7, related to an additional reference example of the present invention, is a view showing a mouse fetal treated with a clearing reagent for making a biological material transparent.
Fig. 8, related to a further additional reference example of the present invention, is a view showing the result of an observation of the neural progenitor cells in a mouse hippocampus treated with a clearing reagent for making a biological material transparent.
Fig. 9 is a view for comparison between mouse cerebrum samples treated with a clearing reagent, containing urea as an active component, for making a biological material transparent, or with a conventional technique (BABB method).
Fig. 10 is a view for comparison between the results of HeLa cells having various fluorescent proteins expressed therein, the HeLa cells having been treated with a clearing reagent, containing urea as an active component, for making a biological material transparent or with a conventional technique (BABB method).
Fig. 11, related to a still further additional reference example of the present invention, is a view showing the result of an observation of a cerebral cortex having neural progenitor cells transplanted thereto, which cerebral cortex was treated with a clearing reagent for making a biological material transparent.
Fig. 12, related to a yet additional reference example of the present invention, is a view showing the results of immunostaining on (i) biological materials before a clearing treatment with a clearing reagent for making a biological material transparent and (ii) biological materials which were, after the clearing treatment, brought back to states that they had before the clearing treatment.
Fig. 13, related to an example of the present invention, is a view showing the result of light transmittance observation of a mouse hippocampus having been subjected to a clearing treatment.
Fig. 14, related to another example of the present invention, is a view showing the result of light transmittance observation of mouse brain slices having been subjected to a clearing treatment.
Fig. 15, related to yet another additional reference example of the present invention, is a view showing dependence of a clearing treatment on urea concentration.

### Description of Embodiments

The following will describe an embodiment of the present invention in detail.

### [1. Method for Clearing Treatment with use of Clearing Reagent for Making Biological Material Transparent]

### (Outline of Method for Clearing Treatment)

A method according to the present invention for a clearing treatment is a method for making a biological material transparent, and includes a first permeation step and a second permeation step (described below) in this order. Preferably, the method according to the present invention for a clearing treatment further includes a third permeation step subsequent to the second permeation step.
1) The first permeation step of causing a solution (a "first reagent for making a biological material transparent") to permeate into a biological material, which solution contains at least one compound (may be collectively called "urea compound") selected from the group consisting of urea and urea derivatives at a predetermined concentration.
2) The second permeation step of causing a solution (a "second reagent for making a biological material transparent") to permeate into the biological material, which solution contains at least one compound selected from the group consisting of urea and urea derivatives at a concentration higher than the concentration of the at least one compound contained in the solution used in the first permeation step.
3) The third permeation step of causing a solution (a "third reagent for making a biological material transparent") into the biological material, which solution contains at least one compound selected from the group consisting of urea and urea derivatives at a concentration lower than the concentration of the at least one compound contained in the solution used in the second permeation step.

Note that, in the following description, a term "reagent for making a biological material transparent" is used to collectively refer to the first reagent for making a biological material transparent, the second reagent for making a biological material transparent, and the third reagent for making a biological material transparent. Accordingly, a description simply given on a "reagent for making a biological material transparent" is equivalent to a description which commonly applies to the first through third reagents for making a biological material transparent.

In the method according to the present invention for a clearing treatment for making a biological material transparent, "reagents for making a biological material transparent" having respective different concentrations of urea compound(s) which serve(s) as an active component for the clearing treatment are caused to permeate into a "biological material" in a predetermined order. This process allows a significant reduction in time required for the clearing treatment, while inhibiting an undesirable change in volume of the biological material. This is one of the advantages of the method according to the present invention.

That is, performing the first permeation step and the second permeation step in this order makes it possible to achieve both (i) inhibition of an undesirable change in volume of the biological material and (ii) a significant reduction in time required for the clearing treatment. By further performing the third permeation step, if necessary, it becomes possible to (i) inhibit more reliably an undesirable change in volume of the biological material and (ii), even in a case where an ambient temperature has dropped (in a case where it is cold), reduce more reliably a possibility of damage of the biological material caused by, for example, separation of a urea compound as crystals.

### (First Permeation Step)

The first permeation step is a step of causing the first reagent to permeate into a biological material. More specifically, this step causes the "first reagent for making a biological material transparent" to permeate into the "biological material", for example, in a container for a clearing treatment.

A processing temperature at which the first permeation step is performed is not particularly limited; preferably, the processing temperature is within a range of 15°C or more and not more than 45°C. A processing time for which the clearing treatment is performed is not particularly limited; preferably, the processing time is within a range of two hours or more and not more than one month, more preferably 12 hours or more and not more than three days. A pressure at which the clearing treatment is performed is not particularly limited.

A concentration of the urea compound contained in the first reagent is not particularly limited, as long as it is lower than a concentration of the urea compound contained in the second reagent. Note, however, that the concentration of the urea compound contained in the first reagent is preferably within a range of 1M or more and not more than 5.5M, more preferably 2.5M or more and not more than 5.5M, further more preferably 3.5M or more and not more than 4.5M, particularly preferably 3.7M or more and not more than 4.3M. Note that, in the present invention, in a case where a plurality of types of urea compounds are contained, as an essential active component for the clearing treatment, in a reagent for making a biological material transparent, a "concentration of a urea compound" refers to a total concentration of the urea compounds.

### (Second Permeation Step)

The second permeation step is a step of causing the second reagent to permeate into a biological material. More specifically, this step causes the "second reagent for making a biological material transparent" to permeate into the biological material, for example, in a container for a clearing treatment. It is presumed that the second reagent accelerates permeation of the urea compound into the biological material by containing the urea compound at a concentration higher than those of the urea compounds contained in the first reagent and the third reagent, which is used if necessary.

A processing temperature at which the second permeation step is performed is not particularly limited; preferably, the processing temperature is within a range of 15°C or more and not more than 45°C. A processing time for which the clearing treatment is performed is not particularly limited; preferably, the processing time is within a range of two hours or more and not more than one month, more preferably 12 hours or more and not more than three days. A pressure at which the clearing treatment is performed is not particularly limited.

A concentration of the urea compound contained in the second reagent is not particularly limited, as long as a presupposition that the concentration is higher than a concentration of the urea compound contained in the first reagent is met. Note that, in addition to meeting the presupposition, the concentration of the urea compound contained in the second reagent is preferably within a range of 5.5M or more and not more than 8.5M, more preferably 6M or more and not more than 8.5M, further more preferably 6.5M or more and not more than 8.5M, particularly preferably 7.7M or more and not more than 8.2M. In terms of a concentration difference between the urea compounds contained in the respective first and second reagents, the concentration of the urea compound contained in the second reagent is higher than the concentration of the urea compound contained in the first reagent, preferably by 2M or more, more preferably by 3M or more, further more preferably by 3.5M or more.

### (Third Permeation Step)

The third permeation step, which is performed if necessary, is a step of causing the third reagent to permeate into a biological material. More specifically, this step causes the "third reagent for making a biological material transparent" to permeate into the "biological material", for example, in a container for a clearing treatment.

A processing temperature at which the third permeation step is performed is not particularly limited; preferably, the processing temperature is within a range of 15°C or more and not more than 45°C. A processing time for which the clearing treatment is performed is not particularly limited; preferably, the processing time is within a range of two hours or more and not more than one month, more preferably 12 hours or more and not more than three days. A pressure at which the clearing treatment is performed is not particularly limited.

A concentration of the urea compound contained in the third reagent is not particularly limited, as long as it is lower than a concentration of the urea compound contained in the second reagent. Note, however, that the concentration of the urea compound contained in the third reagent is preferably within a range of 1M or more and not more than 5.5M, more preferably 2.5M or more and not more than 5.5M, further more preferably 3.5M or more and not more than 4.5M, particularly preferably 3.7M or more and not more than 4.3M.

In a particularly preferable aspect, the concentration of the urea compound contained in the first reagent and the concentration of the urea compound contained in the third reagent are substantially the same. Here, "concentrations are substantially the same" preferably refers to a concentration difference of not more than 0.5M, more preferably not more than 0.3M, further more preferably not more than 0.1M. In another aspect, the first reagent and the third reagent are identical solutions.

In the first through third permeation steps, whether the "reagent for making a biological material transparent" or the "biological material" is stored in the container for the clearing treatment first is not particularly limited. In an example case in which the first through third permeation steps are performed consecutively in a single container, the "first reagent for making a biological material transparent" is stored in the container first, and subsequently the "biological material" is stored therein. Subsequently, the first reagent is discarded, the second reagent is stored in the container, the second reagent is discarded, and the third is stored in the container, in this order. A step of, for example, washing the container and the biological material may be included between the first through third permeation steps, if necessary.

The container for the clearing treatment which is used in the above permeation steps and in which the biological material having been subjected to the clearing treatment is stored may be preserved, e.g., at room temperature or in a low-temperature environment until the container is used in the below-described observation step (a step for preserving a sample after a clearing treatment).

### (Active Component of Clearing Reagent for Making Biological Material Transparent)

In the present invention, a solution containing "urea" as an essential active component for making a biological material transparent is used. In another aspect of the present invention, a solution containing a "urea derivative" as an essential active component for making a biological material transparent is used. Each of these solutions corresponds to the "clearing reagent for making a biological material transparent".

The urea derivative is not limited to any specific kind. Concretely, for example, the urea derivative is any of various kinds of ureine or compounds expressed by Formula (1) below. Note that the compounds expressed by Formula (1) include part of ureines. The clearing agent for making a biological material transparent used in the present invention only needs to contain, as an active component, at least one compound selected from the group consisting of urea and urea derivatives. Among these, the clearing agent more preferably contains urea.

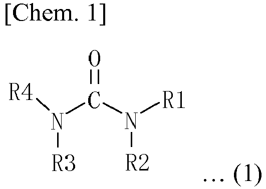

In a urea derivative expressed by Formula (1), each of R1, R2, R3, and R4 is independently a hydrogen atom (note that the one in which all of R1 through R4 are hydrogen atoms is excluded, since it corresponds to urea), a halogen atom, or a hydrocarbon group. Further, in a case where the hydrocarbon group has a plurality of carbon atoms, part of the carbon atoms may be replaced by a hetero atom such as a nitrogen atom, an oxygen atom, or a sulfur atom. Examples of the hydrocarbon group encompass a chain hydrocarbon group and a cyclic hydrocarbon group.

Examples of the chain hydrocarbon group encompass a chain alkyl group, a chain alkenyl group, and a chain alkynyl group. The chain hydrocarbon group may have any number of carbon atoms. For example, the chain hydrocarbon group may be straight-chain or branched one having 6 or less carbon atoms, preferably, an alkyl group having 1 through 3 carbon atoms. The chain hydrocarbon group may have a substituent such as a halogen atom. Examples of the chain alkyl group encompass a methyl group, an ethyl group, a propyl group, an isopropyl group, a butyl group, an iso-butyl group, a sec-butyl group, a tert-butyl group, a hexyl group, and an octyl group.

The cyclic hydrocarbon group may be, for example, a cycloalkyl group or a cycloalkenyl group. The cyclic hydrocarbon group may have a substituent such as a halogen atom. Examples of the cycloalkyl group encompass those having 3 or more and preferably not more than 6 carbon atoms, such as a cyclopropyl group, a cyclobutyl group, a cyclopenthyl group, and a cyclohexyl group. Examples of the cycloalkenyl group encompass those having 3 or more and preferably not more than 6 carbon atoms, such as a cyclohexenyl group.

Examples of the halogen atom encompass a fluorine atom, a chlorine atom, a bromine atom, and an iodine atom.

The following 1) and 2) are more preferable, concrete examples of the urea derivatives expressed by Formula (1) :
1) Any three groups selected from R1 through R4 are hydrogen atoms, and the other one group is (i) a halogen atom or (ii) a chain hydrocarbon group having 1 through 6 carbon atoms, more preferably, the other one group is an alkyl group having (i) 1 through 3 carbon atoms or (ii) 1 or 2 carbon atoms.
2) Any two groups selected from R1 through R4 are hydrogen atoms, and each of the other two groups is independently (i) a halogen atom or (ii) a chain hydrocarbon group having 1 through 6 carbon atoms, more preferably, both of the other two groups are alkyl groups each having (i) 1 through 3 carbon atoms or (ii) 1 or 2 carbon atoms. Furthermore preferably, one of the two groups which are hydrogen atoms is selected from R1 and R2, and the other of the two groups is selected from R3 and R4.

### (Advantages of Use of Urea and/or the Like as Active Component)

Urea is an extremely low toxic substance derived from a living organism. Therefore, a "clearing reagent for making a biological material transparent" used in the present invention has the following advantages: 1) The clearing reagent used in the present invention can be used to make transparent not only fixed biological materials but also non-fixed (living) biological materials. 2) Urea has a relatively low possibility of damaging fluorescent proteins and quenching of fluorescence therefrom, and therefore the clearing reagent used in the present invention is also applicable to an observation of a biological material with use of a fluorescent protein. 3) Urea is quite low in cost and easily available, and furthermore is easy to handle; therefore, use of the clearing reagent used in the present invention allows a clearing treatment to be performed at an extremely low cost and by a simple procedure.

In addition to these advantages, the clearing reagent used in the present invention also has the following advantages: 4) Compared with conventional clearing reagents for making a biological material transparent, the clearing reagent used in the present invention can greatly improve transparency of non-transparent biological materials having high light scattering properties, thereby enabling an observation of various fluorescent proteins and fluorescent substances existing in ultra-deep tissues. 5) Particularly, for brain tissues, use of the clearing reagent used in the present invention makes it possible to make transparent a white matter layer, which has been a barrier against an observation of a deep portion, thereby enabling an observation of a region (e.g., corpus callosum) located deeper than the white matter layer. 6) A clearing treatment according to the present invention is reversible. Specifically, merely by immersing in an equilibrium salt solution a biological material having been subjected to the clearing treatment, it is possible to bring the biological material back to a state that the biological material had before the clearing treatment. Further, before and after the clearing treatment, antigenicity of a protein and/or the like is unchanged and maintained. This allows an assay by means of a general tissue staining or immunostaining.

Note that using, instead of urea, the above-described urea derivative can provide the similar effects.

### (Surfactant)

The "clearing reagent for making a biological material transparent" used in the present invention may contain a surfactant, if necessary. The surfactant is preferably a nonionic surfactant, since the nonionic surfactant gently facilitates intrusion of the present clearing reagent into a biological tissue. Examples of the nonionic surfactant encompass: fatty acid surfactants such as polyoxyethylene sorbitan monolaurate, polyoxyethylene sorbitan monopalmitate, polyoxyethylene sorbitan monostearate, and polyoxyethylene sorbitan monooleate; higher alcohol surfactants such as polyvinyl alcohol; and alkylphenol surfactants such as polyoxyethylene octylphenyl ether. Specifically, for example, the surfactant may be at least one selected from the group consisting of: Triton X (Registered Trademark) series such as Triton X-100 and Triton X-140; Tween (Registered Trademark) series such as Tween-20, Tween-40, Tween-60, and Tween-80; and NP-40 (product name). As the surfactant, a mixture of two or more kinds may be used, if necessary.

These surfactants can enhance permeability of urea with respect to a biological material, thereby improving efficiency of the clearing treatment. In particular, in a clearing treatment on a biological material (e.g., a white matter layer of brain tissues) on which a clearing treatment is relatively difficult, the clearing reagent preferably contains a surfactant.

Note that, as with the case of urea, above surfactants can enhance permeability of the urea derivative with respect to a biological material.

In a case where the "reagent for making a biological material transparent" contains a surfactant, at least one of the first reagent, the second reagent, and the third reagent (which is added if necessary) should contain a surfactant. Note, however, that the first and second reagents (or the first through third reagents) preferably contain the same surfactant, more preferably contain the same surfactant at substantially the same concentration. Here, "substantially the same concentration" refers to a concentration difference of not more than 0.01(w/v)%.

### (Water-Soluble Macromolecular Compound)

The "clearing reagent for making a biological material transparent" used in the present invention may further contain a water-soluble macromolecular compound, if necessary. Here, the macromolecular compound refers to the one which has a molecular weight of approximately 50,000 to 60,000, for example, and which substantially never intrudes into cells. Further, the macromolecular compound is preferably the one which does not cause denaturation or the like of a biological material. Specific examples of the water-soluble macromolecular compound encompass a crosslinked sucrose macromolecular substance, polyethylene glycol, polyvinyl pyrrolidone, and Percoll (product name; a macromolecular substance obtained by covering colloidal silica with a polyvinyl pyrrolidone film). Specific examples of the crosslinked sucrose macromolecular substance encompass a macromolecular substance which is obtained by crosslinking (copolymerizing) sucrose with epichlorohydrin and which has a weight-average molecular weight of approximately 70,000, such as Ficoll PM70 (product name).

Unlike urea and a urea derivative, these water-soluble macromolecular compounds substantially never intrude into cells. Furthermore, these water-soluble macromolecular compounds are soluble in water. Therefore, these water-soluble macromolecular compounds are considered to contribute to controlling of an osmotic pressure difference between the inside and outside of a cell. As such, each of these water-soluble macromolecular compounds helps a biological material to be subjected to a clearing treatment maintain its original shape, and particularly contributes to prevention of swelling of the biological material. In a case where the clearing reagent according to the present invention has a relatively high osmotic pressure, the clearing reagent preferably contains any of these water-soluble macromolecular compounds. However, the present invention is not limited to this.

In a case where the "reagent for making a biological material transparent" contains the water-soluble macromolecule, at least one of the first reagent, the second reagent, and the third reagent (which is added if necessary) should contain the macromolecule. Note that, since the concentration of the urea compound contained in the second reagent is higher than the concentrations of the urea compounds contained in the respective first and third reagents, it may be preferable, in view of more reliably inhibiting swelling of the biological material, that at least the second reagent contains the water-soluble macromolecular compound. Note that, in a case where the first and second reagents (or the first through third reagents) contain the macromolecule, the first and second reagents (or the first through third reagents) preferably contain the same macromolecule, more preferably contain the same macromolecule at substantially the same concentration. Here, "substantially the same concentration" refers to a concentration difference of not more than 0.01M.

### (Other Components)

The "clearing reagent for making a biological material transparent" used in the present invention can contain a "drying inhibition component", which is at least one compound selected from glycerol, carboxy vinyl polymer, hydroxypropyl methylcellulose, propylene glycol, and macrogol, if necessary. The drying inhibition component prevents drying of a biological material subjected to a clearing treatment. In particular, in a case where the biological material after the cleaning treatment may be kept waited for a long time period before an optical microscopic observation thereof, or in a case where an optical microscopic observation of the biological material is time-consuming, the clearing reagent of the present invention preferably contains any of the above drying inhibition components. The drying inhibition components presented above also have an effect of inhibiting, to some extent, swelling of the biological material by regulating an osmotic pressure of the clearing reagent.

In a case where the "reagent for making a biological material transparent" contains any of the drying inhibition components presented above, at least one of the first reagent, the second reagent, and the third reagent (which is used if necessary) should contain the drying inhibition component. In view of inhibiting mild swelling of the biological material, in addition to the effect of inhibiting drying of the biological material, the drying inhibition component may be added only to the first reagent and the third reagent (which is added if necessary). Note that, in a case where the first and second reagents (or the first through third reagents) contain the drying inhibition component, the first and second reagents (or the first through third reagents) preferably contain the same drying inhibition component, more preferably contain the same drying inhibition component at substantially the same concentration.

Further, in addition to the above-described "urea and/or a urea derivative", "surfactant", and "water-soluble macromolecular compound", the "clearing reagent for making a biological material transparent" used in the present invention may contain an additive(s) such as a pH adjusting agent and/or an osmotic pressure controlling agent, if necessary.

### (Solvent)

The "clearing reagent for making a biological material transparent" used in the present invention is a solution containing a solvent in which urea is soluble. The solvent is not limited to any specific kind, as long as urea is soluble in the solvent. Preferably, water is used as a main solvent; particularly preferably, only water is used as the solvent. Note that, in the present invention, what is meant by the expression "water is used as a main solvent" is that a volumetric percentage of water to all solvents used is larger than that of any other solvent, and preferably that water is used in an amount which accounts for more than 50% and not more than 100% of a total volume of all solvents used. A "clearing reagent for making a biological material transparent" prepared by using water as a main solvent is referred to as a "clearing reagent for making a biological material transparent" as an aqueous solution.

In the case where water is used as a main solvent, the water may be mixed with dimethyl sulfoxide (DMSO) for application to a fixed sample, for example. It is expected that, for example, use of a mixture of DMSO and water to a fixed sample provides effects such as (i) improvement in permeability of the clearing reagent with respect to a biological material and (ii) facilitation of a clearing treatment with respect to a tissue having a keratin surface.

Main advantages of the use of water as the solvent are as follows: 1) Urea, which is an active component of the "clearing reagent for making a biological material transparent" used in the present invention, is excellent in resolvability in water; therefore, the use of water as the solvent makes it possible to prepare easily and at a low cost the clearing reagent for making a biological material transparent. 2) Compared with a case where an organic solvent is used as a main solvent, the use of water as the solvent does not involve dehydration of a biological material when the biological material is subjected to a clearing treatment; therefore, the use of water as the solvent can prevent the problem of shrinkage of a biological material. 3) Compared with a case where an organic solvent is used as a main solvent, the use of water as the solvent significantly reduces the possibility of damaging a fluorescent protein; this makes it possible to observe, with use of a fluorescent protein, a biological material having been subjected to a clearing treatment. 4) The use of water as the solvent makes it possible to apply the clearing reagent of the present invention not only to a clearing treatment on a fixed material but also to a clearing treatment on a living material. 5) The use of water as the solvent makes a clearing treatment reversible (described later), that is, the use of water as the solvent can bring a biological material having been subjected to a clearing treatment back to a state that it had before the clearing treatment, if necessary. 6) Compared with a case where an organic solvent is used as a main solvent, the use of water as the solvent enhances safety in handling of the clearing reagent.

The "clearing reagent for making a biological material transparent" used in the present invention may be a buffer which can maintain a pH suitable for a biological material to be subjected to a clearing treatment. Further, a "clearing reagent for making a biological material transparent" according to the present invention may have an osmotic pressure adjusted to a degree which does not cause deformation of a biological material to be subjected to a clearing treatment and which allows urea to sufficiently penetrate into the biological material.

Note that, as with the case of urea, the above solvent can also be used for the urea derivative.

In a case where the "reagent for making a biological material transparent" is an aqueous solution, at least one of the first through third reagents should be an aqueous solution. Note that it is preferable that each of the first and second reagents (or the first through third reagents) be an aqueous solution.

### (Quantitative Relationship between Components)

The "clearing reagent for making a biological material transparent" used in the present invention is not particularly limited in terms of an amount of "urea" contained therein, as long as the clearing reagent with that amount of urea can proceed the clearing treatment on a biological material. Note that an upper limit of the amount of urea contained in the clearing reagent, that is, an upper limit of the amount of urea contained in the second reagent is determined by the solubility of urea with respect to a solvent to be used. For example, a clearing reagent with a relatively small amount of urea can perform a required treatment by performing the treatment for a long time, while a clearing reagent with a relatively large amount of urea can perform a required treatment by performing the treatment for a short time, although this depends on the type of the biological material to be subjected to the treatment.

In the case where a "surfactant" is used in a clearing reagent of the present invention, the clearing reagent is not particularly limited in terms of an amount of the surfactant contained therein. Preferably, the surfactant is contained therein at a concentration of 0.025(w/v)% or more and not more than 5(w/v)%, more preferably 0.05(w/v)% or more and not more than 0.5(w/v)%, particularly preferably 0.05(w/v)% or more and not more than 0.2(w/v)%. Note that the unit "(w/v)%" represents a percentage of a weight (w (gram) ) of a surfactant used, with respect to a volume (v (milliliter) ) of the clearing reagent.

In the case where a "water-soluble macromolecular compound" is used in a clearing reagent of the present invention, the clearing reagent is not particularly limited in terms of an amount of water-soluble macromolecular compound contained therein. Preferably, the water-soluble macromolecular compound is contained therein at a concentration of 2.5(w/v)% or more and not more than 40(w/v)%. Further, in view of a balance between a swelling prevention effect for a biological material and a refractive index of the biological material after the clearing treatment, the above concentration is more preferably 5(w/v)% or more and not more than 25(w/v)%, further more preferably 10(w/v)% or more and not more than 20(w/v)%, particularly preferably 10(w/v)% or more and not more than 15(w/v)%. Note that the unit "(w/v)%" represents a percentage of a weight (w (gram) ) of the water-soluble macromolecular compound used, with respect to a volume (v (milliliter) ) of the clearing reagent.

In the case where a "drying inhibition component" such as glycerol is used in a clearing reagent of the present invention, the clearing reagent is not particularly limited in terms of an amount of the drying inhibition component contained therein. Preferably, the drying inhibition component is contained therein at a concentration of 2.5(w/v)% or more and not more than 20(w/v)%, more preferably 5(w/v)% or more and not more than 15(w/v)%, particularly preferably 8(w/v)% or more and not more than 12(w/v)%. Note that the unit (w/v)% represents a percentage of a weight (w (gram) ) of the drying inhibition component used, with respect to a volume (v (milliliter) ) of the clearing reagent.

### (Subject Biological Material)

A biological material to be subjected to a clearing treatment using the "clearing reagent for making a biological material transparent" is not limited to any specific kind. Preferably, the biological material is a material derived from a plant or an animal, more preferably a material derived from an animal such as the one selected from fish, amphibians, reptiles, birds, and mammals, particularly preferably a material derived from a mammal. The mammal is not limited to any specific kind, examples of which encompass: laboratory animals such as mice, rats, rabbits, guinea pigs, and primates except for humans; pet animals such as dogs and cats; farm animals such as cows and horses; and humans.

Alternatively, the biological material may be an individual itself (except for a living human individual). Further alternatively, the biological material may be an organ, a tissue, or a cell taken from an individual of a multicellular organism. A "clearing reagent for making a biological material transparent" used in the present invention has excellent ability to make a subject transparent; therefore, even if the biological material is a tissue or an organ (e.g., the whole of or part of a brain) derived from a multicellular animal or an individual itself (e.g., an embryo) of a multicellular animal which is not a human, the biological material can be subjected to a clearing treatment.

Further, the biological material may be either of (i) a material fixed for a telescopic observation and (ii) a non-fixed material. In a case of using a fixed material, the material is preferably immersed in, e.g., a 20(v/w)% sucrose-PBS solution adequately (e.g., for 24 hours or more) after being subjected to a fixing process. Furthermore, preferably, this material is embedded into an OCT compound and frozen by liquid nitrogen, thawed in PBS, and then fixed again by a 4(v/w)% PFA-PBS solution.

Specific examples of the biological material encompass: a biological tissue having a fluorescent chemical substance injected thereto; a biological tissue stained with a fluorescent chemical substance; a biological tissue having a fluorescent protein-expressed cell transplanted thereto; and a biological tissue taken from a genetically-modified animal in which a fluorescent protein is expressed.

### (Preparation of Clearing Reagent for Making Biological Material Transparent)

A method for preparing a "clearing reagent for making a biological material transparent" used in the present invention includes dissolving, in a solvent, (i) "urea and/or a urea derivative" and (ii) a "surfactant", a "water-soluble macromolecular compound", a "drying inhibition component", and/or the like, each of which is used if necessary. A procedure for dissolving or mixing the component(s) in the solvent is not particularly limited.

### (Step for Observation of Biological Material Having Been Subjected to Clearing Treatment)

On the biological material having been subjected to the clearing treatment, an observation step by, e.g., an optical microscope is subsequently performed. On the biological material to be subjected to the observation step, a visualizing treatment step (e.g., staining or marking) may be performed (i) before the clearing treatment step or (ii) after the clearing treatment step but before the observation step, if necessary.

For example, in a case where the visualizing treatment step involves use of a fluorescent protein, a fluorescent protein gene is transferred into a living biological material before the clearing treatment step so that the fluorescent protein will be expressed therein.

In a case where the visualizing treatment step is (i) injection of a fluorescent chemical substance (which is not a fluorescent protein) into a biological material or (ii) staining of a biological material with a fluorescent chemical substance, the visualizing treatment step is preferably performed before the clearing treatment step. However, such a visualizing treatment step may be performed after the clearing treatment step. Alternatively, the visualizing treatment step may be staining of a biological material with a chemical substance which is not a fluorescent chemical substance.

The observation step can be performed with use of any type of optical microscope. For example, the observation step can be performed by employing a three-dimensional super-resolution microscopy technique (e.g., STED, 3D PALM, FPALM, 3D STORM, or SIM). Preferably, the observation step is performed by employing a multi-photon excitation type (generally, two-photon excitation type) optical microscopy technique.

### (Other Applications)

A clearing treatment using the "clearing reagent for making a biological material transparent" is reversible. As such, a biological material having been subjected to the clearing treatment can be brought back to a state that it had before the clearing treatment, e.g., by immersing the biological material in an equilibrium salt solution so as to remove therefrom the components of the clearing reagent. Here, specific examples of the equilibrium salt solution encompass: equilibrium salt solutions (e.g., PBS and HBSS) which are buffered by phosphate; an equilibrium salt solution (TBS) which is buffered by tris hydrochloride; an artificial cerebrospinal fluid (ACSF); and basal media for cell culturing, such as MEM, DMEM, and Ham's F-12.

The use of the clearing reagent does not cause denaturation or the like of a protein, etc. in the biological material, before and after the clearing treatment, or in a case where, after the clearing treatment, the biological material is brought back to a state that it had before the clearing treatment. Accordingly, antigenicity of the protein, etc. in the biological material is preserved as unchanged. As such, for example, after a biological material is subjected to a clearing treatment and an optical microscopic observation, the biological material can be brought back to a state that it had before the clearing treatment, so as to undergo, e.g., a detailed assay by means of generally-used tissue staining or immunostaining.

### [2. Kit for Clearing Treatment for Making Biological Material Transparent, and Treatment System]

### (Kit for Clearing Treatment for Making Biological Material Transparent)

A "kit for a clearing treatment for making a biological material transparent" according to the present invention includes a first solution containing the urea compound at a predetermined concentration and a second solution containing the urea compound at a concentration higher than the concentration of the urea compound contained in the first solution. The first solution corresponds to the first reagent for making a biological material transparent and the third reagent for making a biological material transparent. The second solution corresponds to the second reagent for making a biological material transparent. In a case where the first reagent and the third reagent are different from each other, the "kit for a clearing treatment for making a biological material transparent" may include a third solution which (i) contains the urea compound at a concentration lower than the concentration of the urea compound contained in the second solution and (ii) has a composition different from that of the first solution.

The "kit for a clearing treatment for making a biological material transparent" may further include at least one selected from: a "container for a clearing treatment" used in the clearing treatment step; a "biological material holding tool (e.g., tweezers)"; an "equilibrium salt solution" for bringing a biological material having been subjected to a clearing treatment back to a state that it had before the clearing treatment; and an "instruction manual for the kit". Note that the instruction manual for the kit describes, for example, a procedure or the like of a method, as described above in the section "Outline of Method for Clearing Treatment", for a clearing treatment with use of the first and second reagents for making a biological material transparent, more preferably with use of the first through third reagents for making a biological material transparent.

The following will describe examples of more specific compositions of the first through third solutions. The following clearing reagents are quite suitable for a clearing treatment particularly on the whole of or part (e.g., the hippocampus or the whole or part of the cerebrum) of the brain or an embryo of a mammal such as a mouse.

### • First solution (1) or third solution (1):

An aqueous solution obtained by dissolving urea in water at a concentration of 2.5M or more and not more than 5.5M, more preferably 3.5M or more and not more than 4.5M, further more preferably 3.7M or more and not more than 4.3M.

### • First solution (2) or third solution (2):

An aqueous solution obtained by dissolving, in water, (i) urea at a concentration of 2.5M or more and not more than 5.5M, more preferably 3.5M or more and not more than 4.5M, further more preferably 3.7M or more and not more than 4.3M, (ii) a nonionic surfactant (e.g., Triton X-100) at a concentration of 0.05(w/v)% or more and not more than 0.2(w/v)%, and (iii) a drying inhibition component (e.g., glycerol) at a concentration of 8(w/v)% or more and not more than 12(w/v)%.

### • First solution (3) or third solution (3):

An aqueous solution obtained by dissolving, in water, (i) urea at a concentration of 2.5M or more and not more than 5.5M, more preferably 3.5M or more and not more than 4.5M, further more preferably 3.7M or more and not more than 4.3M, (ii) a nonionic surfactant (e.g., Triton X-100) at a concentration of 0.05(w/v)% or more and not more than 0.2(w/v)%, (iii) a drying inhibition component (e.g., glycerol) at a concentration of 8(w/v)% or more and not more than 12(w/v)%, and (iv) a water-soluble macromolecular compound (e.g., Ficoll) at a concentration of 5(w/v)% or more and not more than 25(w/v)%.

### • First solution (4) or third solution (4):

An aqueous solution obtained by dissolving, in water, (i) urea at a concentration of 2.5M or more and not more than 5.5M, more preferably 3.5M or more and not more than 4.5M, further more preferably 3.7M or more and not more than 4.3M, (ii) a nonionic surfactant (e.g., Triton X-100) at a concentration of 0.05(w/v)% or more and not more than 0.2(w/v)%, and (iii) dimethyl sulfoxide (DMSO) at a concentration of 8(w/v)% or more and not more than 12(w/v)%.

### • Second solution (1):

An aqueous solution obtained by dissolving urea in water at a concentration of 5.5M or more and not more than 8.5M, more preferably 6M or more and not more than 8.5M, further more preferably 7.7M or more and not more than 8.2M.

### • Second solution (2):

An aqueous solution obtained by dissolving, in water, (i) urea at a concentration of 5.5M or more and not more than 8.5M, more preferably 6M or more and not more than 8.5M, further more preferably 7.7M or more and not more than 8.2M and (ii) a nonionic surfactant (e.g., Triton X-100) at a concentration of 0.05(w/v)% or more and not more than 0.2(w/v)%.

Note that in the case where the urea derivative (or a mixture of urea and the urea derivative) is used instead of urea, the first solutions (1) through (4), the third solutions (1) through (4), and the second solutions (1) and (d) may be each prepared with the urea derivative (or the mixture) at the same concentration as the above-described concentration of urea.

### (System for Clearing Treatment for Making Biological Material Transparent)

A system for a clearing treatment for making a biological material transparent according to the present invention includes: a "clearing reagent for making a biological material transparent" used in the present invention; and the above-described "biological material" which has been isolated. Further, in this system, the clearing reagent has permeated into the biological material so as to make the biological material transparent. That is, a concept of this system for a clearing treatment encompasses, e.g., (i) a treatment system including a biological material which is in a midterm stage of a clearing treatment or (ii) a treatment system including a biological material on which a clearing treatment has been completed.

### [Examples]

The following will further specifically describe the present invention with reference to Reference Examples, Examples, Comparative Examples, etc. below. However, the present invention is not limited to these. Note that the reagents for making a biological material transparent which are described in the Reference Examples and contain urea as an active component can be suitably used as the first through third reagents for making a biological material transparent in the present invention.

### [Reference Example 1: Observation of Hippocampus]

### (Step for Perfusion Fixation)

A transgenic mouse having a fluorescent protein YFP expressed in its neurons of the nervous system (YFP-H line: provided by Professor Josh Sanes of Harvard University, U.S.A. [reference] Feng et al. Neuron, 28: 41-51, 2000) of 7 to 8 week-old after birth was used. A peristaltic pump was used to perfuse an ice-cold PBS from the left cardiac ventricle of the mouse, and then to perfuse an ice-cold fixing solution (4% paraformaldehyde-PBS, pH 7.4), so that the mouse was systemically fixed.

### (Step for Taking-Out and Fixing of Biological Material)

Subsequently, the cranial bones were removed from the mouse, and the hippocampus was carefully taken out therefrom. Then, the hippocampus taken out was immersed in an ice-cold fixing solution (4% paraformaldehyde-PBS, pH 7.4) for one night at 4°C. Thereafter, the hippocampus was transferred into a 20% sucrose-PBS solution, and was then gently shaken for 24 hours at 4°C.

Next, after the hippocampal tissue was completely replaced by the 20% sucrose-PBS solution, the hippocampus was embedded into an OCT compound, and was then frozen by liquid nitrogen. Then, the frozen hippocampus was put into PBS, and was thawed at room temperature. The hippocampus thawed was refixed in a 4% paraformaldehyde-PBS for an hour.

### (Step for Clearing Treatment and Observation of Biological Material)

Lastly, the refixed hippocampus was immersed in a clearing reagent according to the present reference example for making a biological material transparent and was shaken at room temperature for three days. The clearing reagent was an aqueous solution prepared by dissolving 4M urea in pure water. At the point when the clearing treatment had progressed (three days after the start of the treatment), the hippocampus was embedded in agarose gel (concentration: 0.5%(w/v) or less), and was observed from its bottom side to top surface side with use of an upright two-photon microscope (product name: FV1000MPE, manufactured by Olympus Corporation) provided with a laser having a wavelength of 920 nm. Note that an objective lens used in the observation had a working distance of 2 mm.

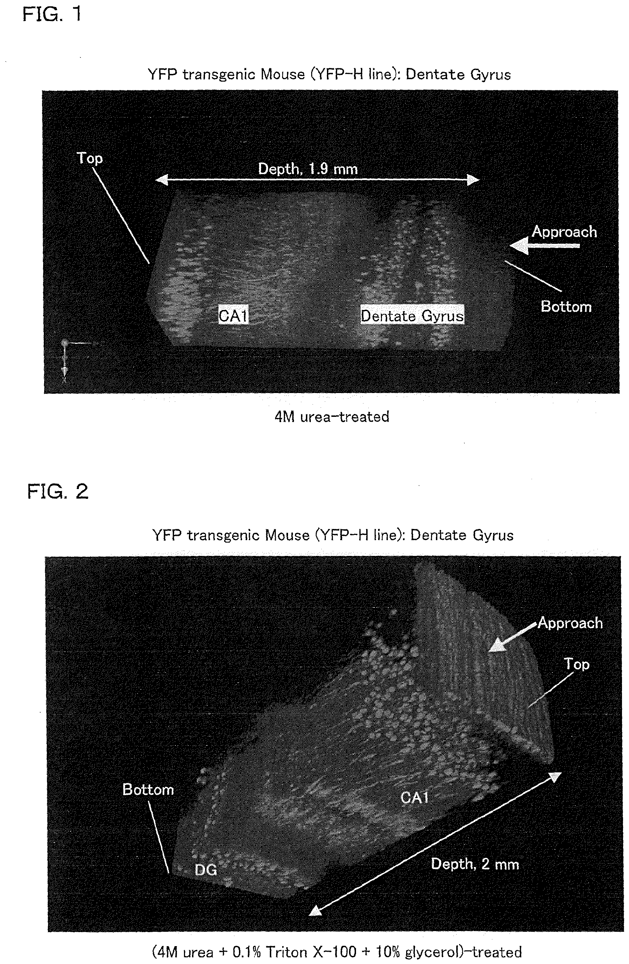

The result of the observation is shown in Fig. 1. As shown in Fig. 1, performing the clearing treatment with use of the clearing reagent according to the present reference example could allow a clear observation of a range of approximately 1.9 mm in depth (corresponding to the thickness of the biological material), the range covering the dentate gyrus (DG), the CA1, and the top surface of the hippocampus.

### [Reference Example 2: Observation of Hippocampus and Study of Reagent]

A mouse hippocampus was observed according to the same method as that of Reference Example 1, except that (i) Reference Example 2 used, as the clearing reagent used in the "Step for Clearing Treatment for Making Biological Material Transparent", an aqueous solution (referred to as a SCALE-A2 reagent) prepared by dissolving, in pure water, 4M urea, 0.1%(w/v) Triton X-100, and 10%(w/v) glycerol and (ii) Reference Example 2 performed an observation from the top surface side to the bottom side of the hippocampus.

The result of the observation is shown in Fig. 2. As shown in Fig. 2, the clearing treatment with use of the clearing reagent according to the present reference example could allow a clear observation of a range of approximately 2 mm in depth (corresponding to the thickness of the biological material), the range covering the top surface, the CA1, the dentate gyrus (DG), and the bottom of the hippocampus.

### [Reference Example 3: Observation of Cerebrum]

A mouse cerebrum was observed according to the same method as that of Reference Example 1, except for the following points 1) to 3) :
1) In the "Step for Taking-Out and Fixing of Biological Material" of Reference Example 3, the whole of the cerebrum was taken out and fixed, and the cerebrum fixed was used as a biological material.
2) In the "Step for Clearing Treatment and Observation of Biological Material" of Reference Example 3, a SCALE-A2 reagent identical to the one used in Reference Example 2 was used as a clearing reagent for making a biological material transparent.
3) In the "Step for Clearing Treatment and Observation of Biological Material" of Reference Example 3, an objective lens having a working distance of 3 mm was used to perform an observation from the cerebrum top surface (cerebral cortex) side to the hippocampus side.

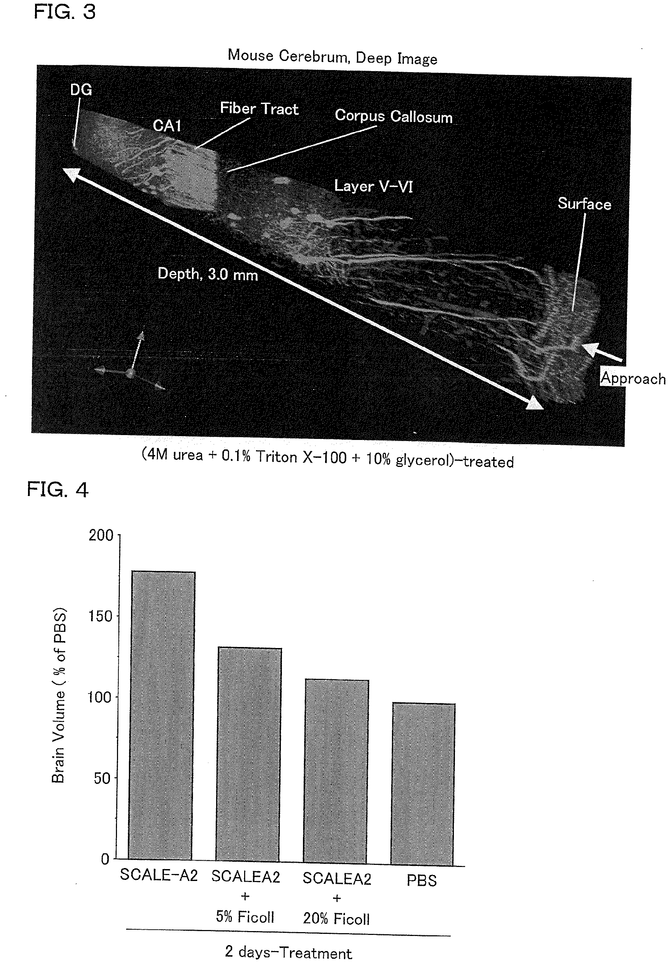

The result of the observation is shown in Fig. 3. As shown in Fig. 3, performing the clearing treatment with use of the clearing reagent according to the present reference example could allow a clear observation of a range of approximately 3 mm in depth (a working limit of the objective lens), the range covering, of course, the cerebral cortex and the layer V-VI, and further covering the white matter region (corpus callosum) below the cerebral cortex, the fiber tract of the hippocampus, and even a cell group constituting the CA1 of, the dentate gyrus (DG), etc.

Note that conventional clearing reagents could not make transparent the white matter region below the cerebral cortex, and therefore did not allow an observation of a range deeper than the white matter region.

### [Reference Example 4: Study of Reagent]

According to the conditions below, the following items were evaluated: (i) a degree to which a SCALE-A2 reagent swells a biological material; and (ii) an effect of swelling prevention measure using Ficoll together with a SCALE-A2 reagent.
1) First, a mouse cerebrum was subjected to a clearing treatment with use of a SCALE-A2 reagent, according to the same method as that described in Reference Example 3 except that the clearing treatment was carried out for two days. Then, a volume of the cerebrum having been subjected to the clearing treatment was measured. Note that, the two-day clearing treatment was sufficient to make the mouse cerebrum transparent to a degree allowing an observation.
2) Mouse cerebra were subjected to a clearing treatment in the same manner as in 1), except that SCALE-A2 reagents respectively having 5%(w/v) Ficoll and 20%(w/v) Ficoll added thereto were used as a clearing reagent. Then, respective volumes of the cerebra having been subjected to the clearing treatment were measured.
3) As a control, a mouse cerebrum was immersed in PBS, and a volume thereof was measured immediately after the immersion (0 day after the immersion).

The result of the observation is shown in Fig. 4. Fig. 4 shows that, in comparison with the control (indicated as "PBS" in Fig. 4), the cerebrum (indicated as "SCALE-A2" in Fig. 4) having been subjected to the above treatment 1) swelled. Meanwhile, swelling of the cerebrum having been subjected to the above treatment 2) was reduced according to the amounts of Ficoll added. In particular, the use of the clearing reagent having 20%(w/v) Ficoll added thereto reduced the swelling by 85% or more (indicated as "SCALE-A2 + 20% Ficoll" in Fig. 4).

The cerebrum which has not swelled or retracted is particularly preferable; however, the cerebrum which has swelled or retracted can also be observable as a sample by an optical microscope.

### [Reference Example 5]

A mouse cerebrum was observed according to the same method as that of Reference Example 1 except for the following points 1) and 2) :
1) In the "Step for Clearing Treatment and Observation of Biological Material" of Reference Example 5, a clearing reagent for making a biological material transparent was an aqueous solution prepared by dissolving, in pure water, 4M urea, 0.1%(w/v) Triton X-100, 10%(w/v) glycerol, and 10%(w/v) Ficoll, and a clearing treatment was performed for three days.
2) In the "Step for Clearing Treatment and Observation of Biological Material" of Reference Example 5, an objective lens having a working distance of 2 mm was used to perform an observation from the cerebrum top surface (cerebral cortex) side to the hippocampus side.

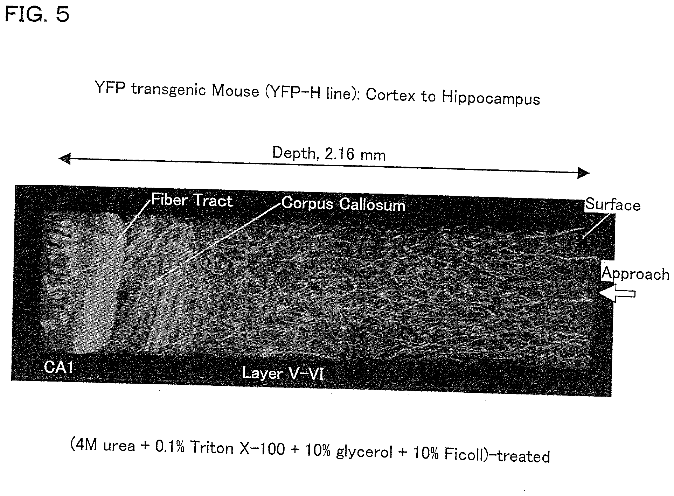

The result of the observation is shown in Fig. 5. As shown in Fig. 5, the clearing treatment with use of the clearing reagent according to the present reference example could allow a clear observation of a range of approximately 2.16 mm in depth (a working limit of the objective lens), the range covering, of course, the cerebral cortex and the layer V-VI, and further covering the white matter region (corpus callosum) below the cerebral cortex, the fiber tract of the hippocampus, and even a cell group constituting the CA1, etc.

Note that conventional clearing reagents could not make transparent the white matter region below the cerebral cortex, and therefore did not allow an observation of a range deeper than the white matter region.

### [Reference Example 6: Evaluation of Light Transmittance]

Mouse brain slices (thickness: 60 micrometer) were treated for one day with (i) water, (ii) PBS, (iii) an 8M urea aqueous solution (clearing reagent), (iv) a 4M urea aqueous solution (clearing reagent), (v) a clearing reagent SCALE-A2 (an aqueous solution containing 4M urea, 0.1%(w/v) Triton X-100, and 10%(w/v) glycerol), and (vi) a clearing reagent SCALE-D2 (an aqueous solution containing 4M urea + 0.1%(w/v) Triton X-100 and 10%(w/v) DMSO), respectively. Then, a transmittance of a cerebral cortex portion of each mouse brain slice with respect to light having a wavelength of 200 nm to 1000 nm was measured. Note that a light wavelength band from 200 nm to 1000 nm covers both of (i) an excitation wavelength range commonly used in a two-photon microscopic observation and (ii) a range of a main fluorescence wavelength of a fluorescent protein to be observed.

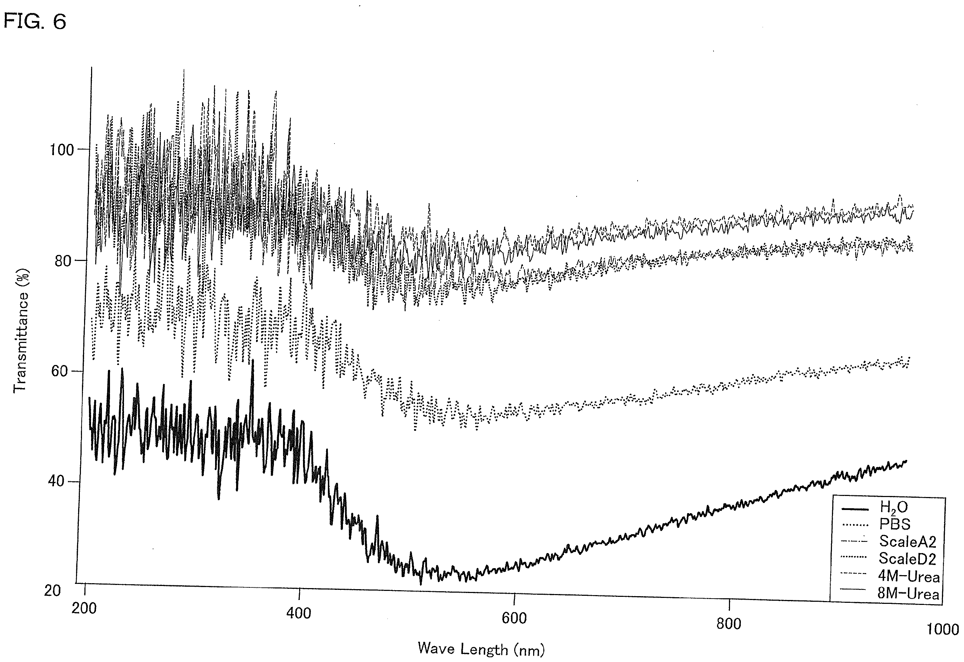

Note that the light transmittance measurement was performed with use of multichannel detector PMA-2 (Hamamatsu Photonics K.K.). The result of the measurement is shown in Fig. 6. As shown in Fig. 6, light transmittances of the samples respectively treated with the 8M urea aqueous solution, the 4M urea aqueous solution, the clearing reagent SCALE-A2, and the clearing reagent SCALE-D2 were each 80% or more. That is, these samples exhibited outstanding effects of the clearing treatment, unlike the samples treated with water or PBS.

### [Reference Example 7: Clearing Treatment for Making Mouse Fetus Transparent]

A Fucci-S-Green (Fucci-S/G2/M) -expressed transgenic mouse fetus at 13.5 days of fetal life (obtained by breeding of mice produced by Laboratory for Cell Function Dynamics, Brain Science Institute, RIKEN (reference: Sakaue-Sawano et al., Cell, 132(3) : 487-98, 2008.) ) was fixed with 4(v/w)% PFA-PBS for two days, and was then immersed in a 20(v/w)% sucrose-PBS solution. Thereafter, the fetus was frozen once, and was then thawed. After that, the fetus was fixed again with 4(v/w)% PFA-PBS for an hour. Subsequently, the fetus was immersed in SCALE-A2 described in Reference Example 2 for seven days for a clearing treatment.

Next, the fetus was embedded in agarose gel (concentration: 0.5%(w/v) or less), and was observed with use of a fluorescent stereomicroscope (product name: MZ10F, manufactured by Leica Microsystems). Note that an objective lens used in the observation had a working distance of 70 mm.

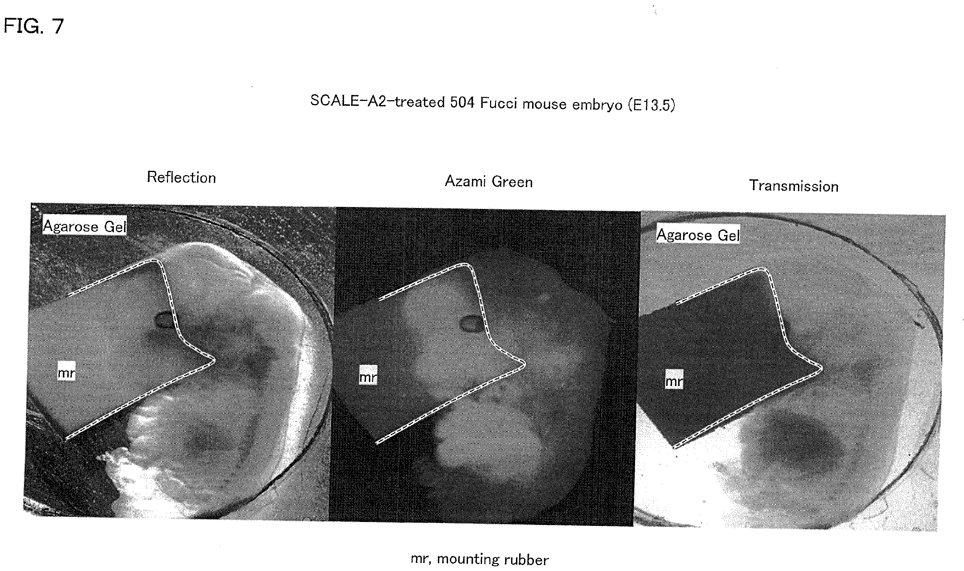

The result of the observation is shown in Fig. 7. As shown in Fig. 7, by performing the clearing treatment with use of the clearing reagent according to the present reference example, the whole body of the mouse fetus was made transparent outstandingly, although only the liver thereof had a small yellow portion left. Note that the mounting rubber (mr) shown in Fig. 7 was used to support the head of the mouse fetus.

### [Reference Example 8: Observation of Neural Progenitor Cells in Mouse Hippocampus]

### (Step for Perfusion Fixation)

A Fucci-S-Green (Fucci-S/G2/M) -expressed transgenic mouse of six week-old after birth (obtained by breeding of mice produced by Laboratory for Cell Function Dynamics, Brain Science Institute, RIKEN [reference] Sakaue-Sawano et al., Cell, 132(3) : 487-98, 2008.) was used. A peristaltic pump was used to perfuse an ice-cold PBS from the left cardiac ventricle of the mouse, and then to perfuse an ice-cold fixing solution (4% paraformaldehyde-PBS, pH 7.4), so that the mouse was fixed systemically.

### (Step for Taking-Out and Fixing of Biological Material)

Subsequently, the cranial bone was removed from the mouse, and the dentate gyrus of hippocampus was carefully taken out therefrom. Then, the dentate gyrus of hippocampus taken out was immersed in an ice-cold fixing solution (4% paraformaldehyde-PBS, pH 7.4) for one night at 4°C. Thereafter, the dentate gyrus of hippocampus was transferred into a 20% sucrose-PBS solution, and was then gently shaken for 24 hours at 4°C.

Next, after the dentate gyrus of hippocampus was completely replaced by the 20% sucrose-PBS solution, the dentate gyrus of hippocampus was embedded into an OCT compound, and was then frozen by liquid nitrogen. Then, the dentate gyrus of hippocampus frozen was put into PBS, and was thawed at room temperature. The dentate gyrus of hippocampus unfrozen was refixed in a 4% paraformaldehyde-PBS for an hour.

Note that the blood vessels of the dentate gyrus used in the present reference example were stained with Lectin-Texas Red conjugate.

### (Step for Clearing Treatment and Observation of Biological Material)

Lastly, the dentate gyrus of hippocampus refixed was immersed for three days in a clearing reagent according to the present reference example for making a biological material transparent, and was shaken at room temperature. The clearing reagent was an aqueous solution prepared by dissolving, in pure water, 4M urea, 0.1%(w/v) Triton X-100, and 10%(w/v) glycerol. At the point when the clearing treatment had progressed (three days after the start of the treatment), the dentate gyrus of hippocampus was embedded in agarose gel (concentration: 0.5%(w/v) or less), and was observed with use of an upright two-photon microscope (product name: FV1000MPE, manufactured by Olympus Corporation) provided with a laser having a wavelength of 920 nm. Note that an objective lens used in the observation had a working distance of 2 mm. The observation was performed on 18 consecutive visual fields, from the ventral side of the hippocampus to 1.7 mm-depth. Then, the results of the observation were combined into an integrated image.

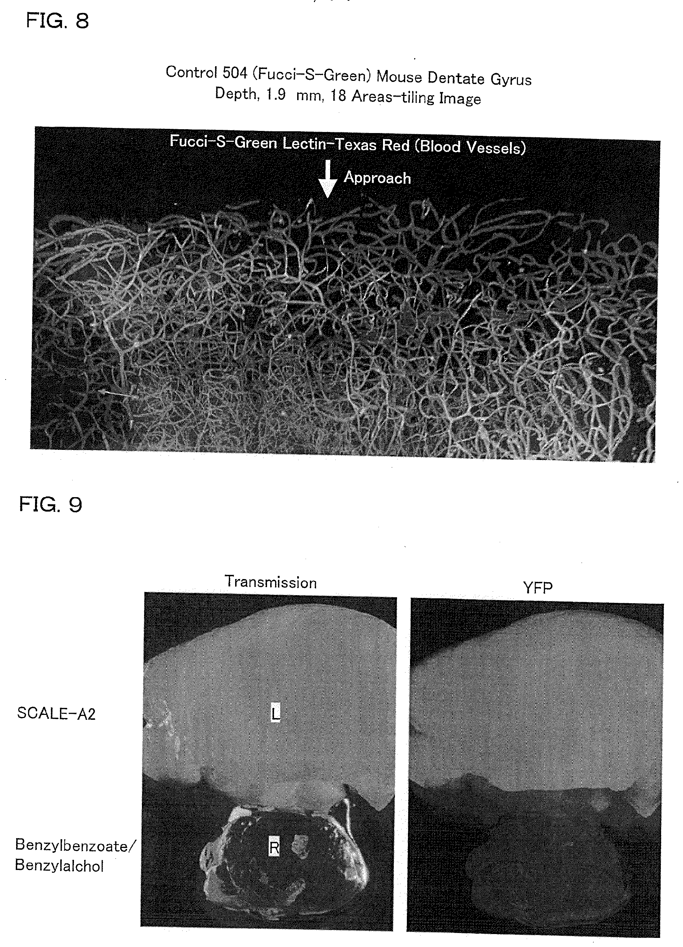

The result of the observation is shown in Fig. 8. As shown in Fig. 8, it was confirmed that the clearing treatment with use of the clearing reagent according to the present reference example allowed to observe that Fucci-S-Green (Fucci-S/G2/M) -positive neural progenitor cells existed around the blood vessels.

### [Reference Example 9: Observation Regarding Transplantation of Neural Progenitor Cells]

Neural progenitor cells derived from the hippocampus of a fluorescent protein Venus-expressed adult rat were obtained. Then, the neural progenitor cells obtained were transplanted into a cerebral cortex portion (in the vicinity of the layer V, approximately 1.7 mm in depth) of a Fischer F344-strain rat (purchased from Japan SLC, Inc.).

Three days after the transplantation of the neural progenitor cells, the Fischer F344-strain rat was fixed according to the method described in the (Step for Perfusion Fixation) of Reference Example 8. Subsequently, according to the method described in the (Step for Taking-Out and Fixing of Biological Material) of Reference Example 8, the cerebral cortex of the Fischer F344-strain rat was fixed. Note that the blood vessels of the rat cerebral cortex used in the present reference example were stained with Lectin-Texas Red conjugate.

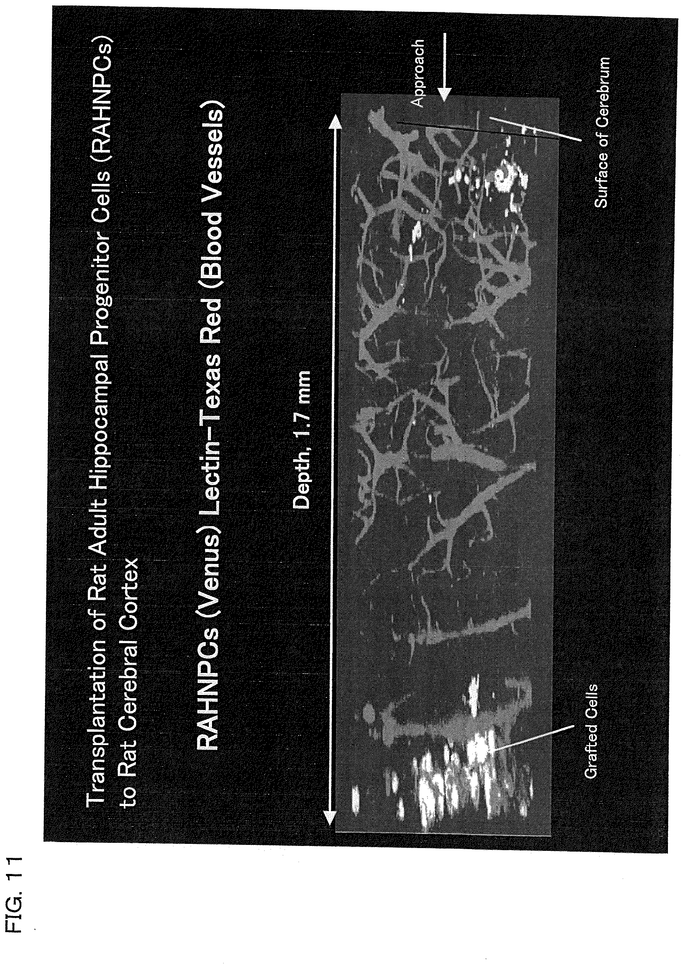

Subsequently, according to the method described in the (Step for Clearing Treatment and Observation of Biological Material) of Reference Example 8, the cerebral cortex was observed. The result of the observation is shown in Fig. 11. As shown in Fig. 11, performing the clearing treatment with use of the clearing reagent according to the present reference example allowed to observe that fluorescence protein Venus-expressed neural progenitor cells had gathered in the vicinity of the blood vessels (stained with Lectin Texas-Red conjugate). Thus, the present method is suitable for an observation of movement of cells after transplantation, changes in the morphology, and the like.

### [Reference Example 10: Comparison with BABB Method (1)]

Transgenic mice each having a fluorescent protein YFP expressed in its nervous system (YFP-H line: provided by Professor Josh Sanes of Harvard University, U.S.A. (reference: Feng et al. Neuron, 28: 41-51, 2000)) of 12 week-old after birth were used. From the mice, the cerebra were taken out. Then, a clearing treatment using a SCALE-A2 reagent (see Reference Example 2) was compared with a clearing treatment according to a benzylbenzoate/benzylalchol (BABB) method described by Dodt et al. in Non-Patent Literature 2.

Each of the clearing treatments was performed in such a manner that the cerebrum was immersed in the clearing treatment solution for two days. The clearing treatment solution used in the BABB method was composed of benzylalchol and benzylbenzoate (composition ratio therebetween = 1:2).

The results are shown in Fig. 9. In Fig. 9, upper portions of the respective columns indicated as "Transmission" and "YFP" show the results of the treatment using the SCALE-A2 reagent, whereas lower portions thereof show the results of the treatment according to the BABB method. Note that the column "Transmission" shows the result of the observation with use of a transmission microscope, whereas the column "YFP" shows the result of the observation of fluorescence from YFP with use of a fluorescence microscope.

As shown in Fig. 9, with the clearing treatment using the SCALE-A2 reagent, it was possible to clearly observe fluorescence emitted by YFP. On the other hand, with the clearing treatment according to the BABB method, the cerebrum was crucially shrunk, and fluorescence from YFP decayed significantly.

### [Reference Example 11: Comparison with BABB Method (2)]

Genes encoding various fluorescent proteins were respectively transferred into HeLa cells (provided by The Institute of Medical Science, The University of Tokyo; Scherer et al., J. Exp. Med. 97(5):695-710, 1953) so that the corresponding fluorescent proteins were expressed therein. The fluorescent proteins expressed were SECFP, EGFP, mAG1, Venus, and DsRed. EGFP and DsRed were purchased from Clontech Laboratories, Inc., and mAGI was purchased from Medical & Biological Laboratories Co., Ltd. Venus and SECFP were produced by introduction of genetic mutation based on GFP, by Laboratory for Cell Function Dynamics, Brain Science Institute, RIKEN. (Reference: SECFP, Hadjantonakis et al., BMC Biotechnol., 2:11, 2002.: EGFP, Zhang et al. Biochem. Biophys. Res. Commun., 227: 707-711, 1996.: Venus, Nagai et al., Nat. Botech., 20: 87-90, 2002.: mAGI, Karasawa et al., J. Biol. Chem., 278(36) : 34167-34171, 2003.: Baird et al., PNAS., 97(22) : 11984-11989, 2000.).

Subsequently, in the same manner as in Reference Example 10, a clearing treatment using a SCALE-A2 reagent (see Reference Example 2) and a clearing treatment according to the benzylbenzoate/benzylalchol (BABB) method described by Dodt et al. in Non-Patent Literature 2 were performed, and these two treatments were compared with each other.

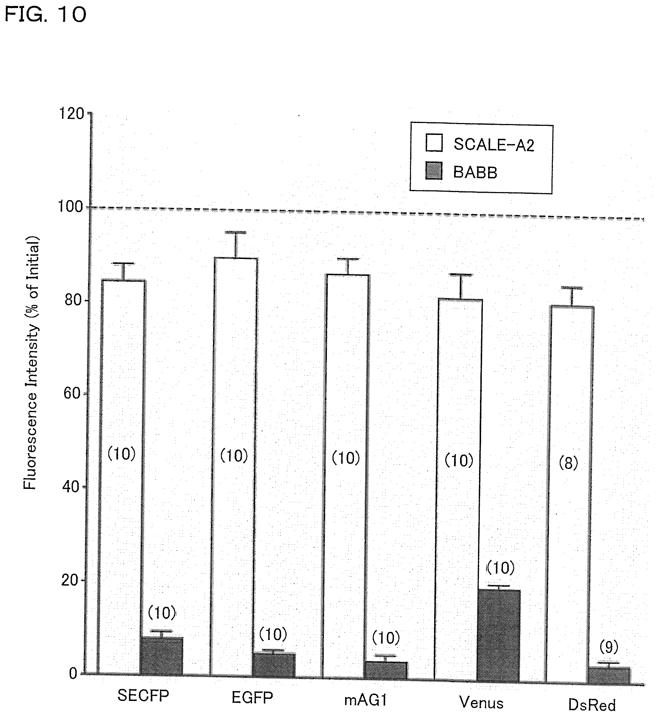

The result of the observation is shown in Fig. 10. Fig. 10 shows a relative value of a fluorescence intensity from a fluorescent protein after a clearing treatment, with respect to a fluorescence intensity (= 100) from the fluorescent protein before the clearing treatment. As is clear from Fig. 10, in each case, the clearing treatment using the SCALE-A2 reagent maintained 80% or more of the fluorescence intensity from the fluorescent protein. On the other hand, in each case, the clearing treatment according to the BABB method caused a significant reduction in the fluorescence intensity from the fluorescent protein.

### [Reference Example 12: Recovery of Tissue after Clearing Treatment]

From the hippocampi of a GFP transgenic mouse and a YFP transgenic mouse (GFP-M line and YFP-H line, provided by Professor Josh Sanes of Harvard University, U.S.A.), 2.5 mm-thickness slices were prepared. Then, these slices were subjected to a clearing treatment using a SCALE-A2 reagent (see Reference Example 2) for five days so that the slices were made transparent once. Thereafter, the slices were rinsed with PBS three times so that the tissues in the slices were brought back to a non-transparent state. The slices in the non-transparent state were compared with slices having not been subjected to a clearing treatment using a SCALE-A2 reagent, in terms of immunostaining properties.

The immunostaining was performed as follows: As a primary antibody, (i) mouse-derived anti-polysialilated neural cell adhesion molecule (PSA-NCAM) monoclonal antibody (Millipore Corporation) that recognizes a polysialic acid of PSA-NCAM existing on a surface of an immature neuronal cell and (ii) rabbit-derived anti-glial fibrillary acidic protein (GFAP) polyclonal antibody (Sigma-Aldrich) that recognizes an intermediate filament GFAP specific to astroglia were used, and were caused to react with their respective target proteins in the slices for 24 hours at 4°C. Thereafter, the slices were rinsed with PBS. Then, the anti-PSA-NCAM monoclonal antibody was caused to react with an Alexa Fluor 546-labeled anti-mouse IgM antibody (Invitrogen, Molecular Probes), which was used as a secondary antibody, at room temperature for three hours; and the GFAP polyclonal antibody was caused to react with an Alexa Fluor 633-labeled anti-rabbit IgG antibody (Invitrogen, Molecular Probes), which was used as a secondary antibody, at room temperature for three hours. In this manner, the slices were immunohistochemically stained. Since fluorescence from these slices did not decayed, triple fluorescent (fluorescence including GFP and YFP) stained images were obtained. The observation was performed with a 20-power objective lens (UplanApo20, Olympus Corporation) with use of an inverted confocal laser microscope (FV500, Olympus Corporation).

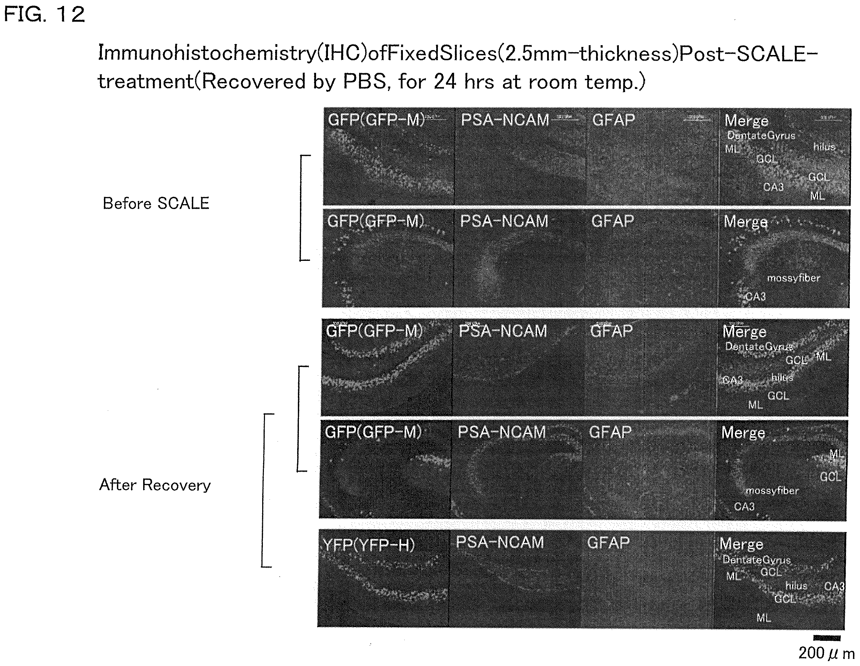

As shown in Fig. 12, both before ("Before SCALE" in Fig. 12) and after ("After Recovery" in Fig. 12) the treatment using SCALE-A2, (i) immature neurons existing in the dentate gyrus of hippocampus and (ii) mossy fibers extending from the immature neurons to the CA3 region were stained with the anti-PSA-NCAM monoclonal antibody with substantially no problem. Similarly, the astroglia was also stained with the anti-GFAP polyclonal antibody without any problem.

### [Example 1: Observation of Cerebrum]

### (Step for Taking-Out and Fixing of Biological Material)

The abdomen and chest of a mouse were opened under a general anesthetic, and a 4% paraformaldehyde-PBS solution was injected and perfused from the left cardiac ventricle of the mouse, so that the mouse was systemically fixed. Then, the cerebrum of the mouse was taken out and immersed in an ice-cold fixing solution (4% paraformaldehyde-PBS solution) for 8 through 12 hours to be fixed. Thereafter, the cerebrum was immersed in a 20% sucrose-PBS solution for two days to be completely replaced by the 20% sucrose-PBS solution.

Next, the cerebrum was embedded into an OCT compound, and was frozen by liquid nitrogen. Then, the cerebrum frozen was put into PBS, and was shaken, together with the OCT compound, in PBS so as to be thawed. The PBS was replaced to rinse the cerebrum. Thereafter, the cerebrum was refixed in a 4% paraformaldehyde-PBS for about 30 minutes.

### (Step for Clearing Treatment)

Next, the cerebrum refixed was transferred into a clearing reagent (SCALE-A2) described in Reference Example 2 for making a biological material transparent, and was shaken at room temperature for two days (a first permeation step). Next, the cerebrum was transferred into a clearing reagent (reagent B) for making a biological material transparent, which clearing reagent contains urea at a concentration higher than the concentration of urea contained in SCALE-A2, and the cerebrum was shaken at room temperature for two days (a second permeation step). The reagent B is an aqueous solution prepared by dissolving, in pure water, 8M urea and 0.1%(w/v) TritonX-100. Next, the cerebrum was transferred into a fresh SCALE-A2 solution, and was shaken at room temperature for two to three days for a clearing treatment (a third permeation step). Note that amounts of SCALE-A2 and the reagent B used per g wet weight of the cerebrum were each approximately 30ml.

The above-described method in which the clearing treatment with use of the reagent B containing urea at a high concentration is performed between treatments with use of SCALE-A2 made it possible to achieve an equivalent degree of transparency in an extremely short processing time (approximately half) as compared with the case in which a clearing treatment was carried out with use of SCALE-A2 alone.

### [Example 2: Observation of Cerebrum]

A mouse hippocampus was observed according to the same method as that of Reference Example 1, except for the following points 1) to 3):
1) A wild-type (nongenetically-modified) normal C57BL6 male mouse of 6 week-old after birth was used.
2) In the "Step for Clearing Treatment and Observation of Biological Material", a clearing treatment was carried out as follows. First, a hippocampus refixed was immersed in a SCALE-A2 reagent (Reference Example 2) and was shaken at room temperature for 48 hours (a first permeation step), and was then immersed in a reagent B (Example 1) and was shaken at room temperature for 48 hours.
3) In the observation step, the hippocampus was placed on a substrate having a pattern to determine a degree of transparency on the basis of whether or not the pattern is seen through the hippocampus.

Note that reference examples of a hippocampus were prepared, one of which was obtained by immersing a refixed hippocampus in PBS and shaking the refixed hippocampus at room temperature for 96 hours, and the other one of which was obtained by immersing a refixed hippocampus in a SCALE-A2 reagent and shaking the refixed hippocampus at room temperature for 96 hours.

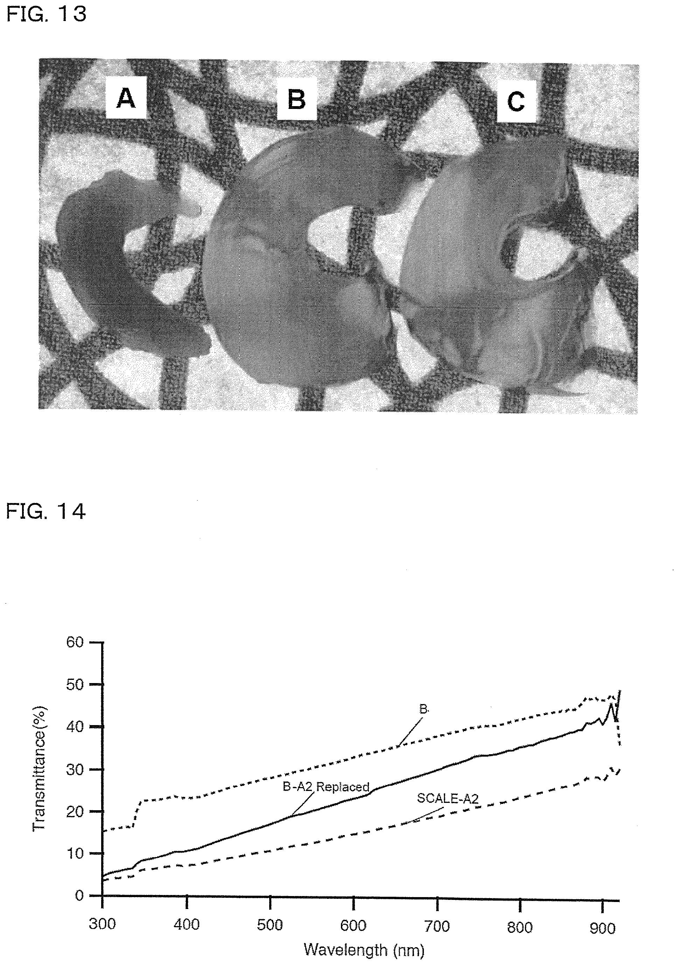

The result of the observation is shown in Fig. 13. In Fig. 13, A corresponds to the hippocampus (reference example) having been treated with PBS, B corresponds to the hippocampus (reference example) having been treated with the SCALE-A2 reagent, and C corresponds to the hippocampus (example) having been treated with the SCALE-A2 reagent and the reagent B. As shown in Fig. 13, it was confirmed that, when the hippocampi were compared with each other with the same processing time, the example clearly had a higher degree of transparency than that of each of the reference examples. Since the hippocampi were substantially identical in size before being treated, the increase in volume of the hippocampi indicated as C in Fig. 13 was not greater than the increase in volume of the hippocampus indicated as B in Fig. 13.

### [Example 3: Observation of Brain Slices]

Mouse brain slices were observed according to the same method as that of Reference Example 1, except for the following points 1) to 3):
1) A wild-type (nongenetically-modified) normal C57BL6 male mouse of 6 week-old after birth was used.
2) In the "Step for Taking-Out and Fixing of Biological Material", the whole of the mouse brain was taken out and the brain was fixed and refixed in the same manner as in Reference Example 1.
3) In the "Step for Clearing Treatment and Observation of Biological Material", a clearing treatment was carried out as follows. First, a coronal-sectioned slice (3 mm in thickness) including the hippocampus was prepared from the refixed brain. Next, the coronal-sectioned slice was cut along the center line into a right hemisphere slice and a left hemisphere slice. Then, one of the right and left hemisphere slices was immersed in a SCALE-A2 reagent (Reference Example 2) and was shaken at room temperature for 24 hours (a first permeation step). Subsequently, the one of the right and left hemisphere slices was immersed in a reagent B (Example 1) and was shaken at room temperature for 24 hours (a second permeation step). Next, a 1.5 mm-thickness coronal-sectioned slice including the hippocampus was cut out of the coronal-sectioned slice. The coronal-sectioned slice thus obtained was used in a first observation step (see the next paragraph). Next, the coronal-sectioned slice having been subjected to the first observation step was rinsed twice with a SCALE-A2 reagent, and then the coronal-sectioned slice was immersed in a SCALE-A2 reagent and was shaken at room temperature for 24 hours (a third permeation step). A coronal-sectioned slice thus obtained was used in a second observation step (see the next paragraph).
3) In the observation step, a spectrophotometer (product name: U-3310 Spectrophotometer, manufactured by Hitachi, Ltd) was used to measure a transmission spectrum of the 1.5 mm-thickness coronal-sectioned slice with light in a wavelength region of 300 nm to 920 nm.

As a reference example, a coronal-sectioned slice (3 mm in thickness) including the hippocampus was prepared from a refixed brain. Next, the coronal-sectioned slice was cut along the center line into a right hemisphere slice and a left hemisphere slice. Then, one of the right and left hemisphere slices was immersed in a SCALE-A2 reagent and was shaken at room temperature for 72 hours. Thus prepared was a 1.5 mm-thickness coronal-sectioned slice including the hippocampus.

The result of the observation is shown in Fig. 14. In Fig. 14, "B" is a result obtained from the first observation of the present example, " B-A2 replaced" is a result obtained from the second observation of the present example, and "SCALE-A2" is a result obtained from the reference example. As shown in Fig. 14, it was confirmed that the example clearly had a higher degree of transparency (approximately double) than that of the reference example, with the same or shorter processing time.

Note that, although data is not shown, the SCALE-A2 reagent, the reagent B, and water have substantially the same transmission spectrum with light in a wavelength region of 300 nm to 920 nm.

### [Reference Example 13: Influence of Urea Concentration on Making Brain Tissue Transparent]

Slices of the cerebrum of a wild-type C57BL6/J mouse (purchased from Japan SLC, Inc.) of 8 week-old were immersed in PBS, an aqueous solution containing 4M urea, an aqueous solution containing 6M urea, or an aqueous solution containing 8M urea, and were shaken at room temperature for 12 hours for an incubation.

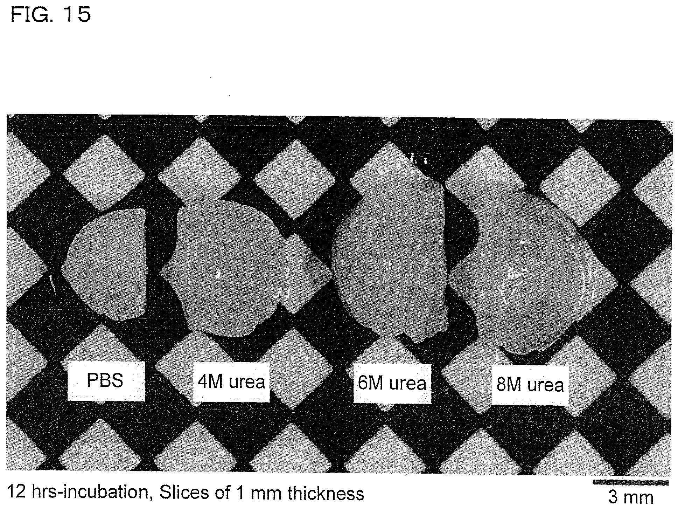

The slices of the cerebrum were prepared as follows. First, an acrylic brain slicer (manufactured by Muromachi Kikai Co., Ltd.) was used to prepare two 1-mm-thickness slices which are continuous with each other in an anteroposterior direction of the cerebrum. Next, the two slices were each divided substantially equally into right and left, so that four slices were obtained. Then, the four slices were immersed in the above-described respective aqueous solutions, and were incubated. The result is shown in Fig. 15. It was confirmed that, in the case of PBS, a tissue was not made transparent. By contrast, in the case of the solution containing 8M urea, the pattern in the background was seen through a tissue the best among the four slices, although the tissue swelled. It was confirmed that, in a concentration range of 4M through 8M, a tissue was made transparent dependently on a urea concentration.

The present invention is not limited to the description of the embodiments and examples above, but may be altered by a skilled person within the scope of the claims. An embodiment based on a proper combination of technical means disclosed in different embodiments is encompassed in the technical scope of the present invention.

### Industrial Applicability

The present invention provides: a more efficient method for making a biological material transparent with use of a component having an excellent bio-affinity; and use thereof.

## Claims

1. A method for making a biological material transparent, comprising:
- a first permeation step of causing a solution to permeate into a biological material, which solution contains at least one compound selected from the group consisting of urea and urea derivatives at a predetermined concentration; and then
- a second permeation step of causing a solution to permeate into the biological material, which solution contains at least one compound selected from the group consisting of urea and urea derivatives at a concentration higher than the concentration of the at least one compound contained in the solution used in the first permeation step.

2. A method as set forth in claim 1, further comprising, subsequent to the second permeation step, a third permeation step of causing a solution to permeate into the biological material, which solution contains at least one compound selected from the group consisting of urea and urea derivatives at a concentration lower than the concentration of the at least one compound contained in the solution used in the second permeation step.

3. The method as set forth in claim 2, wherein:
the concentration of the at least one compound contained in the solution used in the first permeation step and the concentration of the at least one compound contained in the solution used in the third permeation step are substantially the same.

4. The method as set forth in claim 3, wherein:
the solution used in the first permeation step and the solution used in the third permeation step are identical with each other.

5. The method as set forth in any one of claims 1 through 4, wherein:
urea is contained as the at least one compound in each of the solutions.

6. The method as set forth in any one of claims 1 through 5, wherein:
at least one of the solutions is an aqueous solution.

7. The method as set forth in any one of claims 1 through 6, wherein:
at least one of the solutions contains a surfactant.

8. The method as set forth in claim 6 or 7, wherein:
the aqueous solution further contains a water-soluble macromolecular compound.

9. The method as set forth in any one of claims 1 through 8, wherein:
at least one of the solutions further contains at least one selected from the group consisting of glycerol, carboxy vinyl polymer, hydroxypropyl methylcellulose, propylene glycol, and macrogol.

10. The method as set forth in any one of claims 1 through 9, wherein:
the method makes transparent, as the biological material, (i) a tissue or an organ derived from a multicellular animal or (ii) a multicellular animal which is not a human.

11. The method as set forth in any one of claims 1 through 10, wherein:
the concentration of the at least one compound contained in the solution used in the first permeation step is 2.5M or more and not more than 5.5M, and the concentration of the at least one compound contained in the solution used in the second permeation step is 6M or more and not more than 8.5M.

## Patentansprüche

1. Verfahren, um ein biologisches Material transparent zu machen, Folgendes umfassend:
- einen ersten Permeationsschritt, um zu bewirken, dass eine Lösung in ein biologisches Material eindringt, wobei die Lösung mindestens eine Verbindung enthält, die aus der Gruppe ausgewählt ist, die aus Harnstoff und Harnstoffderivaten in einer vorbestimmten Konzentration besteht; und dann
- einen zweiten Permeationsschritt, um zu bewirken, dass eine Lösung in das biologische Material eindringt, wobei die Lösung mindestens eine Verbindung enthält, die aus der Gruppe ausgewählt ist, die aus Harnstoff und Harnstoffderivaten in einer Konzentration besteht, die höher ist als die Konzentration der mindestens einen Verbindung, die in der im ersten Permeationsschritt verwendeten Lösung enthalten ist.

2. Verfahren nach Anspruch 1, ferner umfassend, nach dem zweiten Permeationsschritt, einen dritten Permeationsschritt, bei dem bewirkt wird, dass eine Lösung in das biologische Material eindringt, wobei die Lösung mindestens eine Verbindung enthält, die aus der Gruppe ausgewählt ist, die aus Harnstoff und Harnstoffderivaten besteht, und zwar in einer Konzentration, die niedriger ist als die Konzentration der mindestens einen Verbindung, die in der im zweiten Permeationsschritt verwendeten Lösung enthalten ist.

3. Verfahren nach Anspruch 2, wobei:
die Konzentration der mindestens einen Verbindung, die in der im ersten Permeationsschritt verwendeten Lösung enthalten ist, und die Konzentration der mindestens einen Verbindung, die in der im dritten Permeationsschritt verwendeten Lösung enthalten ist, im Wesentlichen gleich sind.

4. Verfahren nach Anspruch 3, wobei:
die im ersten Permeationsschritt verwendete Lösung und die im dritten Permeationsschritt verwendete Lösung zueinander identisch sind.

5. Verfahren nach einem der Ansprüche 1 bis 4, wobei:
Harnstoff als die mindestens eine Verbindung in jeder der Lösungen enthalten ist.

6. Verfahren nach einem der Ansprüche 1 bis 5, wobei:
mindestens eine der Lösungen eine wässrige Lösung ist.

7. Verfahren nach einem der Ansprüche 1 bis 6, wobei:
mindestens eine der Lösungen ein Tensid enthält.

8. Verfahren nach Anspruch 6 oder 7, wobei:
die wässrige Lösung ferner eine wasserlösliche makromolekulare Verbindung enthält.

9. Verfahren nach einem der Ansprüche 1 bis 8, wobei:
mindestens eine der Lösungen ferner mindestens einen Bestandteil enthält, der aus der Gruppe ausgewählt ist, die aus Glycerin, Carboxyvinylpolymer, Hydroxypropylmethylcellulose, Propylenglykol und Makrogol besteht.

10. Verfahren nach einem der Ansprüche 1 bis 9, wobei:
das Verfahren als das biologische Material (i) ein Gewebe oder ein Organ, das von einem mehrzelligen Tier stammt, oder (ii) ein mehrzelliges Tier, das kein Mensch ist, transparent macht.

11. Verfahren nach einem der Ansprüche 1 bis 10, wobei:
die Konzentration der mindestens einen Verbindung, die in der im ersten Permeationsschritt verwendeten Lösung enthalten ist, 2,5 M oder mehr und nicht mehr als 5,5 M beträgt, und die Konzentration der mindestens einen Verbindung, die in der im zweiten Permeationsschritt verwendeten Lösung enthalten ist, 6 M oder mehr und nicht mehr als 8,5 M beträgt.

## Revendications

1. Procédé pour rendre transparent un matériau biologique, comprenant :
- une première étape de perméation pour amener une solution à pénétrer dans un matériau biologique, laquelle solution contient au moins un composé choisi dans le groupe constitué d'urée et de dérivés d'urée à une concentration prédéterminée ; et ensuite
- une deuxième étape de perméation pour amener une solution à pénétrer dans une solution dans le matériau biologique, laquelle solution contient au moins un composé choisi dans le groupe constitué d'urée et de dérivés d'urée à une concentration supérieure à la concentration de l'au moins un composé contenu dans la solution utilisée dans la première étape de perméation.

2. Procédé tel que présenté dans la revendication 1, comprenant en outre, après la deuxième étape de perméation, une troisième étape de perméation pour amener une solution à pénétrer dans le matériau biologique, laquelle solution contient au moins un composé choisi dans le groupe constitué d'urée et de dérivés d'urée à une concentration inférieure à la concentration de l'au moins un composé contenu dans la solution utilisée dans la deuxième étape de perméation.

3. Procédé tel que présenté dans la revendication 2, dans lequel :
la concentration de l'au moins un composé contenu dans la solution utilisée dans la première étape de perméation et la concentration de l'au moins un composé contenu dans la solution utilisée dans la troisième étape de perméation sont sensiblement les mêmes.

4. Procédé tel que présenté dans la revendication 3, dans lequel :
la solution utilisée dans la première étape de perméation et la solution utilisée dans la troisième étape de perméation sont identiques.

5. Procédé tel que présenté dans l'une quelconque des revendications 1 à 4, dans lequel : l'urée est contenue comme l'au moins un composé dans chacune des solutions.

6. Procédé tel que présenté dans l'une quelconque des revendications 1 à 5, dans lequel : au moins une des solutions est une solution aqueuse.

7. Procédé tel que présenté dans l'une quelconque des revendications 1 à 6, dans lequel : au moins une des solutions contient un tensioactif.

8. Procédé tel que présenté dans la revendication 6 ou 7, dans lequel :
la solution aqueuse contient en outre un composé macromoléculaire hydrosoluble.

9. Procédé tel que présenté dans l'une quelconque des revendications 1 à 8, dans lequel : au moins une des solutions contient en outre au moins un élément choisi dans le groupe constitué par le glycérol, le carboxypolyméthylène, l'hydroxypropylméthylcellulose, le propylèneglycol et le macrogol.

10. Procédé tel que présenté dans l'une quelconque des revendications 1 à 9, dans lequel : le procédé rend transparent, en tant que matériau biologique, (i) un tissu ou un organe dérivé d'un animal multicellulaire ou (ii) un animal multicellulaire qui n'est pas un humain.

11. Procédé tel que présenté dans l'une quelconque des revendications 1 à 10, dans lequel :
la concentration de l'au moins un composé contenu dans la solution utilisée dans la première étape de perméation est de 2,5 M ou plus et pas plus de 5,5 M, et la concentration de l'au moins un composé contenu dans la solution utilisée dans la deuxième étape de perméation est de 6 M ou plus et pas plus de 8,5 M.
